# EUROPÄISCHE PATENTSCHRIFT

(11) **EP 2 840 901 B1**
(45) Veröffentlichungstag und Bekanntmachung des Hinweises auf die Patenterteilung: **07.03.2018**
(21) Anmeldenummer: 12716051.3
(22) Anmeldetag: 24.04.2012
(51) Int. Cl.: A22C 25/16

(54) **VERFAHREN ZUM DURCHFÜHREN EINES FILETIERSCHNITTS ZUM FILETIEREN VON FISCHEN, VORRICHTUNG ZUM DURCHFÜHREN DES FILETIERSCHNITTS GEMÄSS DEM VERFAHREN SOWIE FÜR DAS VERFAHREN UND DIE VORRICHTUNG EINGERICHTETES KREISMESSERPAAR UND KREISMESSER**
PROCESS FOR PERFORMING A FILLETING CUT FOR FILLETING FISH, DEVICE FOR PERFORMING THE FILLETING CUT ACCORDING TO THE PROCESS AS WELL AS DISC KNIFE AND PAIR OF DISC KNIVES FOR SAID PROCESS AND DEVICE
PROCÉDÉ POUR DÉCOUPER POISSON EN FILETS, APPAREIL POUR EFFECTUER LE DÉCOUPAGE SELON LE PROCÉDÉ, AINSI QUE COUTEAU CIRCULAIR ET PAIR DE COUTEAUX CIRCULAIRES POUR LES DITES PROCÉDÉ ET APPAREIL

(43) Veröffentlichungstag der Anmeldung: 04.03.2015
(73) Patentinhaber: Nordischer Maschinenbau Rud. Baader GmbH + Co. KG, 23560 Lübeck (DE)
(72) Erfinder: JÜRS, Michael, 23683 Haffkrug (DE); SCHROEDER, Matthias, 23619 Badendorf (DE)
(74) Vertreter: Stork Bamberger Patentanwälte PartmbB
(86) Internationale Anmeldenummer: PCT/EP2012/057493
(87) Internationale Veröffentlichungsnummer: WO 2013/159814

(56) Entgegenhaltungen:
- EP-A1- 2 206 585
- WO-A1-99/20115
- DE-A1- 19 745 891
- DE-A1- 19 817 840

## Beschreibung

Die Erfindung betrifft ein Verfahren zum Durchführen eines Filetierschnitts zum Filetieren von Fischen, wobei die Fische in einer Filetierlinie schwanzvoraus gefördert werden und der Filetierschnitt längs einer Reihe von keilförmigen, an einem Hauptgrätenstrunk abstehenden Strahlengräten mit sich von Strahlengräte zu Strahlengräte vergrößernder Keilbreite mit einem Paar von scharfe Schneidkanten aufweisenden, Fleisch durchschneidenden Kreismessern durchgeführt wird, die, eine V-Anordnung der Kreismesser bestimmend, mit einem Messerwinkel zueinander ausgerichtete Antriebsachsen aufweisen, wobei die geförderten Fische mittels des Filetierschnitts von ihrem Schwanzende ausgehend geschnitten werden. Die Erfindung bezieht sich auch auf eine Vorrichtung zum Durchführen des Filetierschnitts gemäß dem genannten Verfahren, umfassend ein Paar von scharfe Schneidkanten aufweisenden, Fleisch durchschneidenden Kreismessern, die, eine V-Anordnung der Kreismesser bestimmend, mit einem Messerwinkel zueinander ausgerichtete Antriebsachsen aufweisen, sowie eine Fördereinrichtung, mit der die Fische in einer Reihe schwanzvoraus gefördert werden und die einen freien Raum belässt, in dem das Kreismesserpaar zum Abschneiden des Fleisches längs einer Reihe von Strahlengräten des Fisches angeordnet ist. Weiterhin sind ein Kreismesserpaar sowie ein dafür gestaltetes Kreismesser zum Durchführen des Verfahrens bzw. zur Verwendung in einer genannten Vorrichtung eingerichtet.

Filetierschnitte, um die es geht, werden durchgeführt, um Muskelfleisch von Strahlengräten (Speichengräten) von Fischen zu trennen. Bei den zu bearbeitenden, zu filetierenden Fischen handelt es sich um Fische, von denen der Kopf getrennt ist und die von Eingeweiden zumindest im Wesentlichen befreit sind. Üblicherweise sind einerseits eine Vorrichtung zum Abtrennen des Muskelfleisches von ventralen Strahlengräten und andererseits eine Vorrichtung zum Abschneiden des Muskelfleischs von dorsalen Strahlengräten vorgesehen. Es kommt darauf an, dass mit einer Filetiervorrichtung eine möglichst große Fleischausbeute erzielt wird. Das heißt, dass an der Hauptgräte des Fisches möglichst wenig Filetfleisch zurück bleiben soll. Die erzielbare Filetfleischmenge ist im Wesentlichen proportional zu den erzeugten Schnittflächen. Demzufolge sollen Filetiermesser so eng wie möglich an die Fleisch tragenden Knochen herangeführt werden, ohne dass Gräten oder Flossen am Filetfleisch zurückbleiben. Diesbezüglich sind besondere Maßnahmen erforderlich, da sich die Geometrie von Strahlengräten, die von dem Strunk der Hauptgräte abstehen, über die Fischlänge ändert. Schwanzseitig des Fisches sind die keilförmigen Strahlengräten relativ klein und dünn und auch im gewissen Maß relativ weich, während sie zur Fischmitte hin von Strahlengräte zu Strahlengräte in ihrer Keilform fußseitig an der Hauptgräte bzw. dem Hauptgrätenstrunk des Fisches breiter werden.

Um die Filetschnitte hinsichtlich der Filetfleischausbeute an die Geometrie der Strahlengräten anzupassen, wird gemäß WO 99/20115 zum Durchführen eines Rückenschnitts ein Paar V-förmig angeordneter Kreismesser vorgesehen, deren Schneidspalt durch im Wesentlichen zwei Maßnahmen veränderbar ist. Einerseits lässt sich der Abstand ihrer Schneiden zu einem Fischförderpfad sowie ihre Winkelstellung zueinander ändern. Anderseits sind die Kreismesser gegen Federmittel verdrängbar. Eine andere bekannte Vorrichtung sieht gegen Federkraft verdrängbare Kreismesser in V-Anordnung vor, wobei die Kreismesser in Bezug auf einen Fischförderpfad (Filetierlinie) so angeordnet sind, dass die engste Stelle des Schneidspalts oberhalb des unteren bzw. dem Fisch nächstliegenden Zenits der Kreismesser liegt, um Filetfleisch räumlich möglichst optimal abzuschneiden. Die bekannten Maßnahmen erfordern besondere Maschinen-/Vorrichtungselemente und -aggregate sowie Steuerungsmaßnahmen. Damit sind zugehörige Einstellarbeit und auch Wartungs- sowie Reinigungsaufwand verbunden.

Die Erfindung zielt darauf ab, dass die Filetfleischausbeute mit relativ einfachen Mitteln wesentlich verbessert wird, wobei der Betrieb der Vorrichtung hinsichtlich Handhabung und Bedienung gleichfalls vereinfacht und verbessert sein soll. Insbesondere sollen auch Einstellungsarbeit sowie Reinigungs- und Wartungsaufwand reduziert sein.

Die erfindungsgemäßen Ziele werden in überraschend einfacher Weise in Verbindung mit den Schritten eines Verfahrens gemäß Anspruch 1 dadurch erreicht, dass der Filetierschnitt mit einer Einstellung und Position der Kreismesser derart durchgeführt wird, dass die Kreismesser in der V-Anordnung an ihren dem Hauptgrätenstrunk nächstliegenden Zenitstellen der Schneidkanten einen eingestellten, einen Schneidspalt bestimmenden kleinsten Schneidkantenabstand aufweisen und dass vom Schwanzende her Fleisch eines jeden Fisches mittels des Kreismesserpaares dadurch geschnitten wird, dass der Schneidspalt mit dem kleinsten Schneidkantenabstand auf ein Grundmaß eingestellt wird, das zumindest im Wesentlichen gleich einer oder kleiner als eine Keilbreite der schwanzseitig äußersten Strahlengräte des geförderten Fisches ist, und dass in fixierter Position der V-Anordnung der Kreismesser die Strahlengräten, deren Keilbreiten sich von Strahlengräte zu Strahlengräte zur Fischkopfseite hin vergrößern, in Anlage an den Kreismesser-Schneidkanten mittels der Fischförderung durch den Schneidspalt geführt werden, wobei die Kreismesser-Schneidkanten, die in ihrem Schneidkantenbereich gegen materialelastische Rückstellkraft flexibel aus der zugehörigen Kreismesserfläche heraus verformbar sind, mittels der sich verbreiternden Strahlengräten unter zunehmender Weitung des Schneidspalts, ausgehend von dem Grundmaß in der fixierten V-Anordnung, gegen die materialelastische Rückstellkraft verdrängt werden.

Weiterhin ist erfindungsgemäß eine Vorrichtung nach Anspruch 11 zum Durchführen des Filetierschnitts gemäß dem erfindungsgemäßen Verfahren vorgesehen, umfassend ein Paar von scharfe Schneidkanten aufweisenden, Fleisch durchschneidenden Kreismessern, die, eine V-Anordnung der Kreismesser bestimmend, mit einem Messerwinkel zueinander ausgerichtete Antriebsachsen aufweisen, sowie eine Fördereinrichtung, mit der die Fische in Reihe schwanzvoraus gefördert werden und die einen freien Raum belässt, in dem das Kreismesserpaar zum Durchschneiden des Fleisches längs einer Reihe von an einem Hauptgrätenstrunk abstehenden Strahlengräten des Fisches angeordnet ist, wobei die Kreismesser in ihrer V-Anordnung an dem passierenden Hauptgrätenstrunk nächstliegenden Zenitstellen der Schneidkanten einen Schneidspalt bilden, der den kleinsten Schneidkantenabstand des Messerpaares aufweist, dessen Größe zum Schneiden der geförderten Fische einrichtbar bzw. einstellbar ist, wobei die V-Anordnung der Kreismesser eine fixierte Grundstellung aufweist, der der genannte kleinste Schneidkantenabstand mit einem festen Grundmaß zugeordnet ist, das zumindest im Wesentlichen gleich einer oder kleiner als eine Keilbreite der schwanzseitig äußersten Strahlengräte des geförderten Fisches ist, und dass die Schneidkanten der Kreismesser mit Schneidkantenbereichen ausgebildet sind, mittels derer die Schneidkanten in der fixierten Grundstellung gegen materialelastische Rückstellkraft aus der zugehörigen Kreismesserfläche heraus derart verformbar sind, dass der Schneidspalt mittels durch ihn hindurchgeförderter Strahlengräten in einem Maß aufweitbar ist, das, dem Schneidkantenabstand entsprechend, der Differenz zwischen den Keilbreiten der schwanzseitig äußersten Strahlengräte und einer kopfseitigen Strahlengräte entspricht und daran angepasst ist.

Zum Durchführen des erfindungsgemäßen Verfahrens bzw. zum Betrieb einer erfindungsgemäßen Vorrichtung zeichnet sich ein Kreismesserpaar nach Anspruch 16 durch besonders angepasste Eigenschaften der Kreismesser aus. Die Kreismesser sind so eingerichtet und gestaltet, dass sie Schneidkanten mit Schneidkantenbereichen aufweisen, mittels derer die Schneidkanten gegen materialelastische Rückstellkraft aus der zugehörigen Kreismesserfläche heraus zur Ausbildung eine Schneidspalts in fixierter V-Anordnung der Kreismesser verformbar sind, wobei das Maß der Verformbarkeit durch die Differenz zwischen den Keilbreiten einer schwanzseitig kleinsten Strahlengräte einer Reihe von Strahlengräten und einer kopfseitig gelegenen Strahlengräte der Strahlengrätenreihe bestimmt und darauf angepasst ist.

Mit Beginn des Auftretens der Strahlengräten werden die Schneidkanten der Kreismesser, die im Schneidkantenbereich gegen materialelastische Rückstellkraft flexibel aus der Kreismesserfläche heraus verformbar sind, in dem auf die Größe der schwanzseitigen Strahlengräten eingestellten Schneidspalt zur Anlage an die schwanzseitigen Strahlengräten gebracht. Die Anlage wird während der Fischförderung beibehalten, wobei der Schneidspalt infolge der flexiblen Verformbarkeit der Schneidkanten der in der V-Anordnung fixierten Kreismesser geweitet wird, und zwar in Anpassung an die Geometrie der Strahlengräten, wobei die Keilbreiten und wenigstens zunächst auch die Längen der Strahlengräten, mit denen die durch Aufbiegung der Schneidkanten zunehmende Spaltweite korrespondiert, von Strahlengräte zu Strahlengräte größer werden. Man erreicht erfindungsgemäß, dass die Filetiermesser so dicht wie möglich an die Strahlengräten durch Anlage an dieselben herangeführt werden. Es resultieren optimale Fleischausbeute ergebende große Schnittflächen, wobei das Filetfleisch dennoch zuverlässig und vollständig von Gräten und Flossen befreit ist. Verfahrensdurchführung und Vorrichtungsgestaltung sind besonders einfach, so dass Handhabung und Betrieb erheblich verbessert sind.

Aufgrund der erfindungsgemäßen Maßnahmen kann das Maß des kleinsten Schneidkantenabstands auf ein Fußmaß der schwanzseitigen kleinsten Strahlengräte an dem oder in der Nähe des Hauptgrätenstrunks eingestellt werden, so dass die zunehmende, den Schneidspalt aufweitende Keilbreite mit dem genannten Fußmaß als kleinster Keilbreite beginnt. Damit erreicht man besonders vorteilhaft, dass der Fleisch abschneidende Trennschnitt mit scharfer Messerklinge bis vorzugsweise unmittelbar an den Körper der Hauptgräte und längs dieser geführt wird.

Die erfindungsgemäßen Maßnahmen sind besonders vorteilhaft zum Durchführen von Filetierschnitten, die Schnittflächen schneiden, die am geschnittenen Filetfleischstück einen großen Anteil haben. Derart große Flächenanteile entstehen mit dem Filetierschnitt, der als Rückenschnitt ausgeführt wird, der als solcher an die dorsalen Strahlengräten des Fisches herangeführt wird.

Eine besonders vorteilhafte und bevorzugte Gestaltung der erfindungsgemäßen Maßnahmen besteht darin, dass der Filetierschnitt ohne Verstellung der fixierten V-Anordnung (Grundstellung) des Kreismesserpaares über die vollständige Reihe der Strahlengräten durchgeführt wird. Wie in jedem Fall beginnt der Filetschnitt an schwanzseitig äußerster Strahlengräte und endet dann an kopfseitig äußerster Strahlengräte. Dabei weitet sich der Schneidspalt während des gesamten die Strahlengräten erfassenden Schnittvorgangs, ohne dass die Kreismesser zur Anpassung an die Geometrie der Strahlengräten in irgendeiner Weise verlagert oder verstellt werden. Die Fixierung der V-Anordnung mit konstantem Schneidkantenabstand kann man besonders einfach dadurch erreichen, dass sämtliche Maßnahmen zum dynamischen Weiten der V-Anordnung, nämlich insbesondere rückstellende Druckfedereinrichtungen entfallen oder blockiert werden.

Vorteile werden aber bereits erreicht, wenn die fixierte V-Anordnung der Kreismesser, in der die Aufweitung des Schneidspalts durch federelastisches Abbiegen der Messer-Schneidkanten durchgeführt wird, wenigstens bis zum mittleren Bereich des Fisches beibehalten wird. In jedem Fall wird erfindungsgemäß die kleinste, an der Schwanzseite des Fisches auftretende Strahlengräte mit form- bzw. kraftschlüssiger Anlage an den deformierbaren Schneidkanten erfasst, wobei der Filetierschnitt dann unter Beibehaltung des Form- und Kraft-/Reibschlusses über eine Mehrzahl der Reihe der Strahlengräten geführt wird. Es kann vorgesehen sein, dass insbesondere etwa in einem mittleren Bereich der Reihe der Strahlengräten oder in der Nähe des kopfseitigen Endes des Fisches die Fixieranordnung des Kreismesserpaares derart verlassen wird, dass die Kreismesser dann axial verdrängt werden können, nachdem die Schneidkanten bereits abgebogen worden sind. Stets kommt es darauf an, dass einer Weitung der V-Anordnung ein Abbiegen der Schneidkanten unter Anlage an den breiter werdenden Strahlengräten vorausgeht. Die Vorrichtung kann dann so gestaltet werden, dass die Kreismesser zum Verlassen der fixierten Grundstellung gegen rückstellende Druckkraft axial verlagerbar angeordnet sind, wobei die Grundstellung unterhalb einer vorgebbaren Größe der Druckkraft fixiert bleibt, also z. B. mittels axial wirkender Druckkraftquelle wie einer Druckfeder, die erst bei einer vorgegebenen Schwelle der sie belastenden Kraft anspricht. Bis zum Erreichen des Druck-Schwellenwerts bleibt die Verformung der Schneidkanten und die damit bewirkte Schneidspaltaufweitung dominant.

Zum Durchführen des erfindungsgemäßen Filetierschnitts kommt es darauf an, dass der schwanzseitige Strahlengrätenbereich zum von der Schwanzseite ausgehende Filetierschnitt entlang der dorsalen bzw. der ventralen Strahlengräten frei zugänglich ist. Dies erreicht man in an sich bekannter Weise besonders einfach dadurch, dass die Bauchhöhlen aufweisenden Fische in linearer Filetierlinie mittels Sätteln, die in die Bauchhöhle einfassen, gefördert werden, wobei die Vorrichtung einen mit Sätteln eingerichteten Förderer umfasst.

Eine vorteilhafte Maßnahme besteht darin, dass die Kreismesser im Bereich des Schneidspalts mit der Fischförderrichtung entsprechender Drehrichtung betrieben werden.

Besonders große Ausbeuten erzielt man durch erfindungsgemäßes Schneiden von Weißfisch aus der Gruppe Alaska Pollack, Schellfisch, Kabeljau und Seelachs sowie von Salmoniden aus der Gruppe Lachsforelle und Pink Salmon.

Auf die genannten und noch andere zweckmäßige und vorteilhafte Ausgestaltungen der Erfindung sind Unteransprüche gerichtet. Lediglich besonders zweckmäßige und vorteilhafte Ausbildungsformen und -möglichkeiten werden anhand der folgenden Beschreibung der in der schematischen Zeichnung dargestellten Ausführungsbeispiele näher beschrieben. Jede beschriebene Einzel- oder Detailgestaltung innerhalb eines Ausführungsbeispiels ist als unabhängiges Detailbeispiel für andere nicht oder nicht vollständig beschriebene, unter die Erfindung fallende Ausführungen und Gestaltungen zu verstehen.

Es zeigen
- Fig. 1A: in Stirnansicht eine V-Anordnung eines erfindungsgemäßen Messerpaares als Bestandteil einer erfindungsgemäßen Vorrichtung an zu schneidenden Fischen zugewandter Einlaufseite,
- Fig. 1B: in Stirnansicht die V-Anordnung gemäß Fig. 1A mit einem schwanzseitig einlaufenden Fisch,

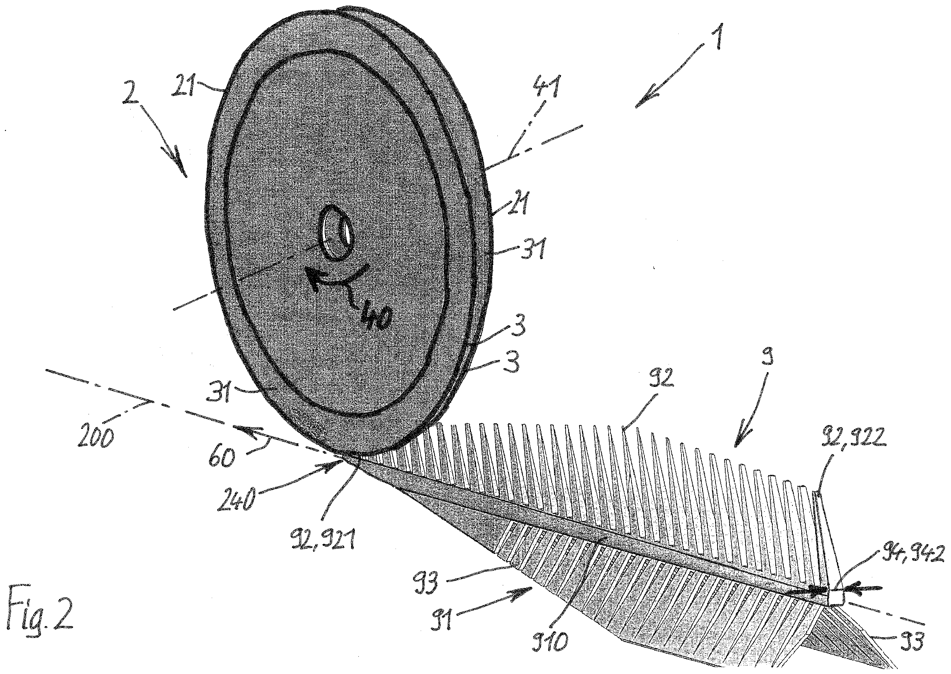

- Fig. 2: in axonometrischer seitlicher Ansicht das Kreismesserpaar gemäß Fig. 1 mit Einlauf des zu schneidenden Fisches,

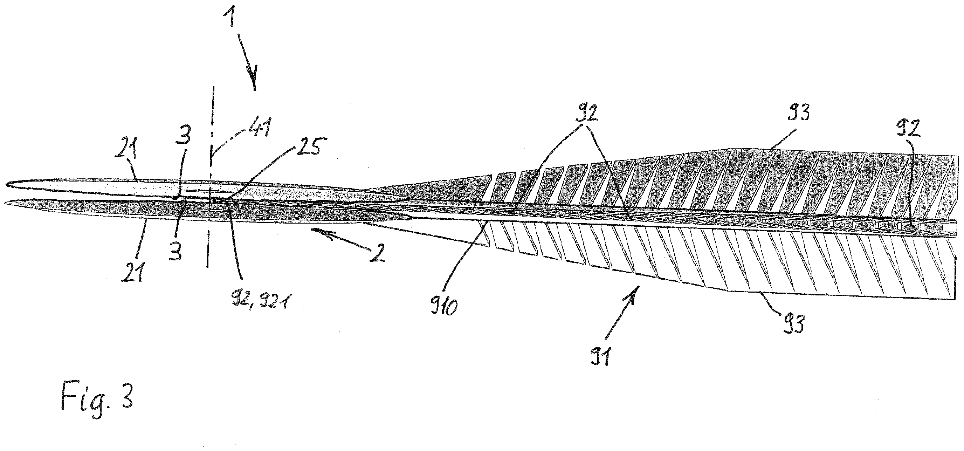

- Fig. 3: eine Draufsicht auf das Kreismesserpaar mit einlaufendem Fisch und
- Fig. 4: eine Darstellung zur Erläuterung erfindungsgemäßer Kreismesserverformung.

Eine erfindungsgemäße Vorrichtung 1 ist mir ihren wesentlichen Teilen nur schematisch dargestellt. Sie umfasst ein Paar 20 von Kreismessern 21, die so ausgerichtet sind, dass sie eine V-Anordnung 2 mit einem Fischförderpfad in einer Filetierlinie 200 zugewandter spitz zulaufender Seite bilden. Die Vorrichtung 1 ist bezüglich einer Mittenebene 10 der V-Anordnung 2 mit ihren Elementen und Aggregaten symmetrisch eingerichtet. Die Kreismesser 21 sind auf nicht dargestellten, in Antriebsachsen 41 sich erstreckenden Antriebswellen jeweils einer Antriebseinrichtung 4, z. B. eines Motors gelagert. Wie strickpunktiert dargestellt, kann jede Antriebseinrichtung 4 mit einer Verstelleinrichtung 5 zum axialen Verlagern der Kreismesser 21 verbunden sein. Die Vorrichtung 1 umfasst weiterhin eine an sich bekannte Fördereinrichtung 6, die gleichfalls nur strichpunktiert schematisch dargestellt ist und z. B. Förderelemente 61 in Form von Sätteln umfasst, die in bekannter Weise jeweils einen Fisch 9 aufsatteln, wobei sie in Förderrichtung 60 in die Bauchhöhle des Fisches 9, diesen schiebend, mit einer Sattelnase einfassen. Die genannten Einrichtungen der Vorrichtung 1 sind an einem nicht dargestellten Maschinengestell angeordnet.

Aus einer Reihe von in der Filetierlinie 200 mit Förderrichtung 60 zu fördernden Fischen ist ein Fisch 9 nur teilweise und unvollständig ohne Fleischstücke schematisch mit einem Teil seiner Knochen bzw. Gräten dargestellt, nämlich mit einer einen Strunk 910 aufweisenden Hauptgräte 91 und von dem Hauptgrätenstrunk 910 abragende dorsale Strahlengräten 92 und Flankengräten 93, die besonders vereinfacht (schematisch) dargestellt sind. Jeder Fisch 9 gelangt entweidet und geköpft zur Vorrichtung 1 und wird in Schwanzrichtung voraus gefördert.

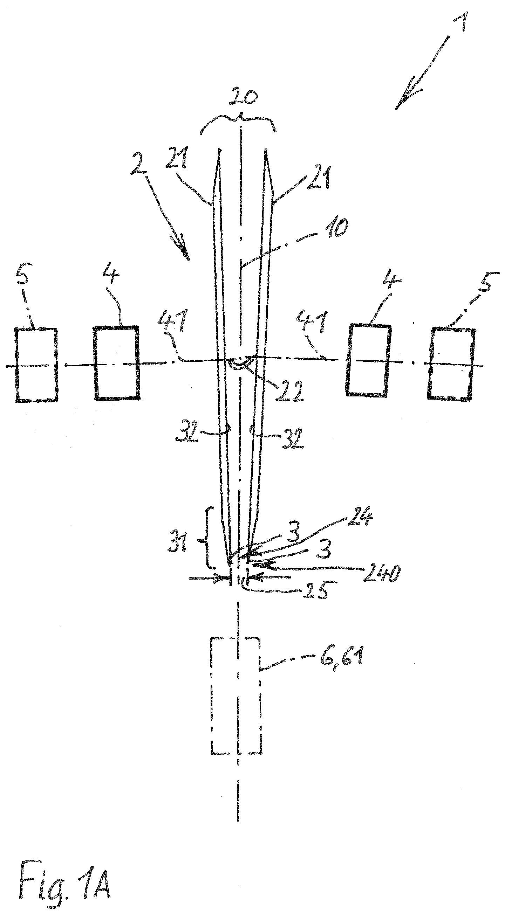

In Fig. 1A ist das Kreismesserpaar 20 in seiner V-Anordnung 2 in einer Grundstellung zu sehen, ohne dass ein Fisch 9 das Kreismesserpaar 20 passiert. Die Kreismesser 21 weisen einander zugewandte Messerflächen 32 auf, die jeweils in einer Schneidkante 3 münden. In der V-Anordnung 2 außenseitig sind die Schneidkanten 3 angefast. In der Grundstellung liegen die Messerflächen 32 vollflächig in geraden Messerebenen.

Die Kreismesser 21 sind in einem festen Abstand zueinander angeordnet, der die Grundstellung definiert, in der die V-Anordnung 2 in dieser Position fixiert ist. Unter dieser Festsetzung oder Arretierung ist zu verstehen, dass die Kreismesser 21 in ihrer Achsposition und gegen axiale Verschiebung gesichert gehalten und gelagert werden. Zwischen den Schneidkanten 3 im Bereich des Schneidkantenabstands 25 ist ein Schneidspalt 24 ausgebildet. Die Antriebsachsen 41 schneiden sich unter einem festen stumpfen Messerwinkel 22, und der kleinste Abstand 25 der Schneidkanten 3 ist an der engsten Schneidstelle 240 des Schneidspalts 24 mit einem festen Grundmaß eingerichtet. Dieses Grundmaß kann durch nicht dargestellte Mittel auf eine gewünschte Größe eingestellt und mit dieser Größe fixiert werden. Entsprechend dem stumpfen Messerwinkel 22 schneiden sich die verlängert gedachten Messerebenen 32 in einem zur Symmetrie-Mittenebene spitzen V-Winkel, z. B. mit ca. 2°.

Erfindungsgemäß ist von besonderer Bedeutung, dass der Schneidkantenabstand 25 mit seinem Grundmaß in der fixierten Grundstellung der V-Anordnung 2 zumindest im Wesentlichen gleich einer oder geringfügig kleiner als einer Keilbreite 94, 941 der schwanzseitig äußersten dorsalen Strahlengräte 92, 921 einer Reihe der dorsalen Strahlengräten 92 des Fisches 9 ist. Für die Geometrie solcher Strahlengräten 92 ist es typisch, dass jede Strahlengräte 92, die rückenseitig an der Hauptgräte 91 des Fisches 9 absteht, in ihrer Dimension quer zu dem Hauptgrätenstrunk 910 von letzterem ausgehend keilförmig abnimmt, wobei sich die Keilbreiten 94, fischabhängig über eine bestimmte Fischlänge auch die Grätenlängen, von Strahlengräte 92 zu Strahlengräte 92 zur Fischkopfseite hin vergrößern. Die genannte Anpassung und Dimensionierung des Grundmaßes des Schneidkantenabstands 25 bezieht sich auf die Keilbreite 941, die an oder jedenfalls nahe des Hauptgrätenstrunks 910 vorhanden ist.

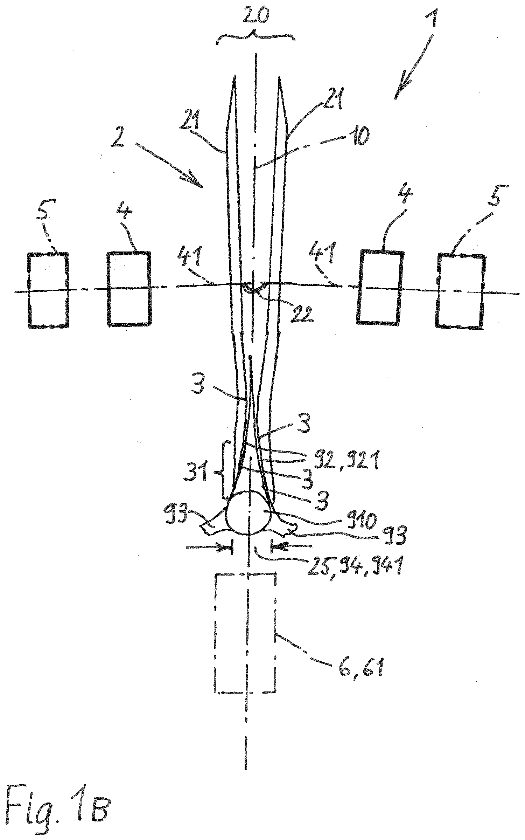

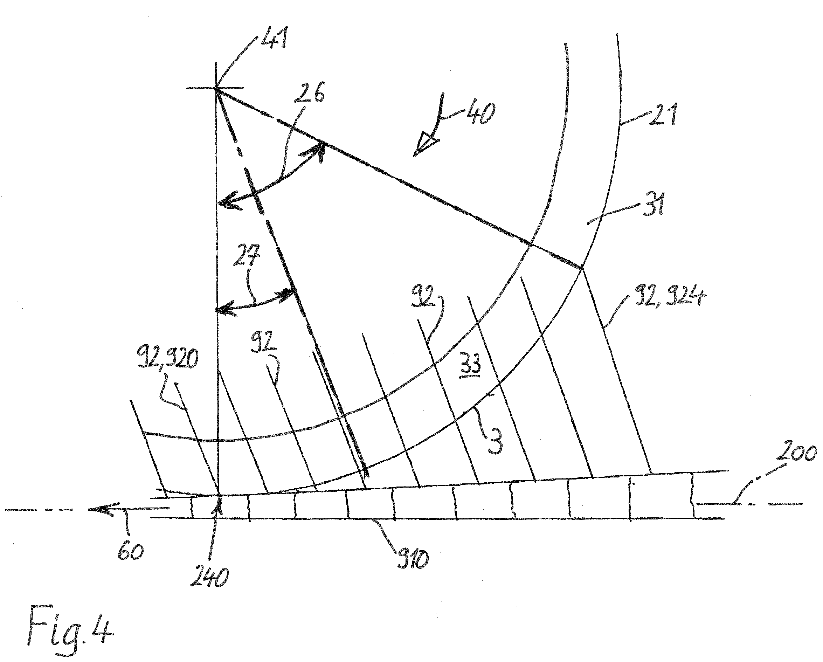

Mit der Dimensionierung des Grundmaßes des Schneidkantenabstands 25 und der Fixierung dieses Grundmaßes ist eine weitere wesentliche Maßnahme der Erfindung verbunden, nämlich dass die Schneidkanten 3 der Kreismesser 21 in einem Schneidkantenbereich 31, der ringförmig ist, zur Außenseite der V-Anordnung 2 federelastisch, nämlich gegen elastische Rückstellkraft des Materials des Schneidkantenbereichs 31 unter Druck-/Spreizkraft abbiegbar sind. Diese Abbiegung ist im dynamischen Betrieb der Kreismesser 21 mit der Ausbildung einer Wellenform der Schneidkante 3 quer zur Kreismesserfläche 32 verbunden, wie dies anhand Fig. 1B und Fig. 4 noch erläutert wird.

Die V-Anordnung 2 ist derart und sie wird so geführt, dass die Kreismesser 21 an ihren dem Hauptgrätenstrunk 910 des zu schneidenden Fisches 9 nächstliegenden Zenitstellen der Schneidkanten 3 den Schneidspalt 24 mit dem kleinsten Schneidkantenabstand 25 aufweisen. Im Ausführungsbeispiel befindet sich die engste Schneidstelle 240 an den untersten, einer 6-Uhr-Position entsprechenden Umfangstellen der Kreismesser 21. Es sind an sich bekannte nicht dargestellte Steuer- und Führungsmittel vorgesehen, um die Verlagerung der V-Anordnung 2 der Kreismesser 21 zur Positionierung für den jeweils zu filetierenden Fisch 9 in Abhängigkeit von Größe und zeitlichem Passieren durchzuführen.

Für die federelastische Flexibilität des Schneidkantenbereichs 31 mit den Schneidkanten 3 kommt es darauf an, dass letztere besonders scharfe Schneidelemente sind, die Muskelfleisch und Lederhaut zuverlässig und ohne zu Hilfenahme von anderen Werkzeugen durchschneiden und abtrennen. Die Schneidkanten 3 sind, ausgehend von dem fixierten Grundmaß des Schneidspalts 24 mit dem kleinsten Schneidkantenabstand 25, in einem besonderen Maß gegen die federelastische Rückstellkraft nach Außen abbiegbar.

Wie aus Fig. 1B ersichtlich, erfolgen Anlage und Aufbiegen bereits mit der ersten, schwanzseitig äußeren dorsalen Strahlengräte 921. Für diese Maßnahme ist das Grundmaß des Schneidkantenabstands 25 ausgelegt. Die Schneidkanten 3 fassen bis an den Hauptgrätenstrunk 910 heran, und im Schneidkantenbereich 31 schmiegen sich die Kreismesser 21 an die Keilform der dorsalen Strahlengräte 921 an. Infolgedessen beginnt der dorsale Rücken-Filetierschnitt in optimal enger Position unter Anlage an der dorsalen Strahlengräte 921. Im weiteren Verlauf des erfindungsgemäßen Verfahrens werden unter Beibehaltung der fixierten Position der V-Anordnung 2 der Kreismesser 21 die Strahlengräten 92 in Anlage an den Kreismesser-Schneidkanten 3 mittels der Fischförderung durch den Schneidspalt 24 geführt, wobei die Kreismesser-Schneidkanten 3 mittels der sich verbreiternden Strahlengräten 92 unter zunehmender Weitung des Schneidspalts 24, ausgehend von dem Grundmaß an der engsten Schneidstelle 240 in der fixierten V-Anordnung 2, gegen die materialelastische Rückstellkraft verdrängt werden.

Im Ausführungsbeispiel ist im kopfseitigen Bereich des Fisches 9 eine dorsale Strahlengräte 92, 922 dargestellt, die eine Keilbreite 94, 942 aufweist, und die geometrischen Verhältnisse sind derart, dass jeder Fisch 9 über seine volle Länge, d. h. bis zu der äußersten kopfseitigen dorsalen Strahlengräte 94 mit größter Keilbreite 94 mittels der Vorrichtung 1 geschnitten wird, und zwar ohne dass die Kreismesser 21 zur Anpassung auf die Geometrie der Strahlengräten 92 in irgendeiner Weise verlagert oder verstellt werden. Soweit die Vorrichtung 1 die Verstelleinrichtung 5 aufweist, kann die Verstelleinrichtung 5 zum Fixieren der V-Anordnung 2 ausgebildet sein. Jeder andere geeignete Fixierung bzw. Festsetzung kann vorgesehen werden.

Im Ausführungsbeispiel ist der sich erweiternde V-Raum zwischen den flexiblen Kreismessern 21 im Zusammenspiel mit der Aufweitung zwischen den Schneidkantenbereichen 31 so groß, dass trotz der axialen Abstandsfixierung der Kreismesser 21 die sich verbreiternden dorsalen Strahlengräten 92 sowie die Rückenflossen in dem genannten Raum ohne weitere besondere Maßnahmen aufgenommen bzw. hindurchgelassen werden. In dieser Einstellung wird der Rücken-Filetierschnitt also über die vollständige Reihe der dorsalen Strahlengräten 32 durchgeführt.

Im Ausführungsbeispiel werden die Kreismesser 21 mit Drehrichtung 40 betrieben, die im Bereich des Schneidspalts 24 der Fischförderrichtung 60 entspricht. Es ist gefunden worden, dass dadurch die Aufweitung und das gesamte dynamische Formverhalten der Kreismesser 21 in den Schneidkantenbereichen 31 zur Anpassung an die sich verdickenden Strahlengräten 92 begünstigt werden.

Im Rahmen der Erfindung ist es auch möglich, dass die Kreismesser 21 mittels der nur optional vorgesehenen Verstelleinrichtungen 5 in Abhängigkeit von besonderer Einstellung gegen rückstellende Druckkraft, zum Beispiel gegen Druckfederkraft, axial verlagerbar angeordnet sind. Stets wird die axiale Verlagerung so eingerichtet, dass die V-Grundstellung unterhalb einer vorgebbaren Größe der Druckkraft fixiert bleibt, so dass die Aufweitung des Schneidspalts durch Abbiegen der Schneidkanten der axialen Verstellung stets vorangeht.

Anhand der Fig. 4 werden die dynamischen Verhältnisse erläutert, durch die sich das erfindungsgemäße Kreismesser 21 auszeichnet und durch die es gekennzeichnet ist. In Fig. 4 ist das eine Kreismesser 21 des Kreismesserpaares 20 zu sehen, das in Drehrichtung 40 zum Beispiel mit 1500 Umdrehungen pro Minute dreht. Dorsale Strahlengräten 92 sind lediglich mit einfachen, in Förderrichtung 60 des Fisches 9 geneigten Strichen dargestellt, die zur Kopfseite des Fisches 9 länger werden. Einige Strahlengräten 92 haben den Schneidspalt 24 bereits durchlaufen. In der dargestellten Momentaufnahme soll sich die dorsale Strahlengräte 920 an der engsten Schneidstelle 240 des Schneidspalts 24 befinden. Währenddessen befindet sich eine kopfseitige dorsale Strahlengräte 924 mit ihrer Spitze unmittelbar vor den Eingriff in den V-Raum des Kreismesserpaares 20. Es ist gefunden worden, dass sich die Kreismesser 21 auch in ihrem der engsten Schneidstelle 240 nacheilenden Bereich 33 an die Gestalt und Geometrie der Strahlengräte 924 in ihrem spitzen bzw. freien Endbereich durch Anformung anpassen, und zwar infolge der Weitung des Schneidkantenabstands 25 an der engsten Stelle 240 des Schneidspalts 24. Diese Wirkung wird besonders ausgeprägt dadurch hergestellt, dass die Drehrichtung 40 und die Förderrichtung 60 gleichsinnig sind bzw. korrespondieren.

Genauer betrachtet, entsteht beim Drehen des Kreismessers 21 um seine Antriebsachse 41 infolge des Abbiegens an der engsten Schneidstelle 240 im Bereich des Schneidkantenbereichs 31 ein wellenförmiger Verlauf der Schneidkante 3 quer zur Messerfläche 32. Dieser wellenförmige Verlauf ist in der Frontalansicht der Fig. 1B zu sehen. Während die Schneidkante 3 an der engsten Stelle 240 auf- bzw. zur Außenseite abgebogen wird, erfährt die durch die Keilbreite 941 bewirkte aufbiegende, verdrängende Kraft eine Reaktionskraft, der zufolge sich der der Schneidstelle 24 nacheilende Schneidkantenbereich 31 bzw. die Schneidkante 3 in zur Abbiegerichtung entgegengesetzte Richtung nach innen verformt, und zwar mit einer Frequenz oder einem Intervall, dass zwischen der Abbiegung nach Außen und der Abbiegung nach Innen ein als Wellenwinkel bezeichneter Winkel 26 von z. B. typischer Weise ca. 65° auftritt. Infolgedessen besteht eine besondere und vorteilhafte Wirkung der Erfindung darin, dass sich die Kreismesser 21 bereits beim Eintritt der in Fig. 4 dargestellten Strahlengräte 924 in den V-Messerspalt an den Bereich von deren Spitze anschmiegt, so dass das Fleisch optimal abgetrennt wird. Die durch Reaktionskraft bewirkte Verformung korrespondiert besonders vorteilhaft mit der abnehmenden Keilform der Strahlengräten 92, d. h. mit der Konizität über ihre Länge.

Im gegebenen Beispiel wird etwa bei einem als Biege-Umkehrwinkel bezeichneten Winkel 27 von ca. 22° ein Wechsel der Biegerichtung des Schneidkantenbereichs 31 quer zur Messerfläche 32 jedes Kreismessers 21 bewirkt. Jedenfalls ist gefunden worden, dass mit der erfindungsgemäßen Schneidkantenaufweitung an der engsten Stelle 240 des Schneidkantenabstands 25 im Schneidspalt 24 optimale Schnittverhältnisse erzielt werden, indem sich der Schnitt der Schneidkanten 3 nicht nur an die fußseitigen Keilbreiten 94 der Strahlengräten 92, sondern auch an die sich verjüngenden (verkleinernden) Keilbreiten 94 einer jeden Strahlengräte 92 anpasst. Offensichtlich vollführt das Kreismesser 21 im Schneidkantenbereich 31, mit Blick in Radialrichtung auf die Schneidkanten 3, die Form eines Art "dynamischen Wellenschnitts". Vorzugsweise wird jedes erfindungsgemäße Kreismesser auf eine solche Wellenform eingestellt und mit seinen Materialeigenschaften ausgelegt. Vorzugsweise und vorteilhaft wird bei einer Umdrehung von größer als 1000 Umdrehungen pro Minute ein Wellenwinkel 26 im Bereich von 60° bis 90° eingerichtet, der dann in der montierten Vorrichtung 1 der engsten Stelle 240 nacheilt, wie aus Fig. 4 ersichtlich wird.

Allgemein lässt sich erfindungsgemäß an der engsten Stelle 240 der V-Anordnung 2 ein Schneidkantenabstand 25 mit einem Grundmaß von 3 mm und weniger einstellen. Eine bevorzugte Umdrehungsgeschwindigkeit der Kreismesser 21 liegt im Bereich von 1000 bis 2000 Umdrehungen pro Minute, vorzugsweise im Bereich von 1500 Umdrehungen pro Minute. Für das Material des Kreismessers 21 eignet sich insbesondere eine gehärtete Stahllegierung, wobei das Kreismesser 21 vorzugsweise einen Durchmesser von 200 mm und eine Scheibenstärke von 2 mm aufweist. Der Schneidkantenbereich 31 weist vorzugsweise eine Ringbreite auf, die im Bereich von 25 % des Kreismesser-Radius gewählt wird. Der Schneidkantenbereich 31 wird insbesondere mit einem seine Stärke verringernden Schliff versehen, um die genannte, beschriebene Wellenverformung bzw. Abbiegung der Schneidkante 3 zu erzielen. In jedem Fall ist die statische und die dynamische Elastizität im Schneidkantenbereich 31 derart, dass sich dieser im fischfreien, unbelasteten Zustand auf das Grundmaß des Schneidkantenabstands 25 zwischen den Schneidkanten 3 an der engsten Stelle 240 zurückstellt. Als besonders vorteilhaft und zweckmäßig hat sich ein Elastizitätsmodul (elastische Abbiegefähigkeit) der Schneidkante 3 quer zur Kreismesserfläche 32 im Bereich von ca. 0,04 mm/Grad bis 0,06 mm/Grand erwiesen.

## Patentansprüche

1. Verfahren zum Durchführen eines Filetierschnitts zum Filetieren von Fischen (9), wobei die Fische (9) in einer Filetierlinie (200) schwanzvoraus gefördert werden und der Filetierschnitt längs einer Reihe von keilförmigen, an einem Hauptgrätenstrunk (910) abstehenden Strahlengräten (92) mit sich von Strahlengräte (92) zu Strahlengräte (92) vergrößernder Keilbreite (94) mit einem Paar (20) von scharfe Schneidkanten (3) aufweisenden, Fleisch durchschneidenden Kreismessern (21) durchgeführt wird, die, eine V-Anordnung (2) der Kreismesser (21) bestimmend, mit einem Messerwinkel (22) zueinander ausgerichtete Antriebsachsen (41) aufweisen, wobei die geförderten Fische (9) mittels des Filetierschnitts von ihrem Schwanzende ausgehend geschnitten werden, wobei der Filetierschnitt mit einer Einstellung und Position der Kreismesser (21) derart durchgeführt wird, dass die Kreismesser (21) in der V-Anordnung (2) an ihren dem Hauptgrätenstrunk (910) nächstliegenden Zenitstellen der Schneidkanten (3) einen eingestellten, einen Schneidspalt (24) bestimmenden kleinsten Schneidkantenabstand (25) aufweisen und dass vom Schwanzende her Fleisch eines jeden Fisches (9) mittels des Kreismesserpaares (20) dadurch geschnitten wird, dass der Schneidspalt (24) mit dem kleinsten Schneidkantenabstand (25) auf ein Grundmaß eingestellt wird, das zumindest im Wesentlichen gleich einer oder kleiner als eine Keilbreite (941) der schwanzseitig äußersten Strahlengräte (921) des geförderten Fisches (9) ist, und dass in fixierter Position der V-Anordnung (2) der Kreismesser (21) die Strahlengräten (92), deren Keilbreiten (94) sich von Strahlengräte (92) zu Strahlengräte (92) zur Fischkopfseite hin vergrößern, in Anlage an den Kreismesser-Schneidkanten (3) mittels der Fischförderung durch den Schneidspalt (24) geführt werden, wobei die Kreismesser-Schneidkanten (3), die in ihrem Schneidkantenbereich (31) gegen materialelastische Rückstellkraft flexibel aus der zugehörigen Kreismesserfläche (32) heraus verformbar sind, mittels der sich verbreiternden Strahlengräten (92) unter zunehmender Weitung des Schneidspalts (24), ausgehend von dem Grundmaß in der fixierten V-Anordnung (2), gegen die materialelastische Rückstellkraft verdrängt werden.

2. Verfahren nach Anspruch 1, **dadurch gekennzeichnet , dass** das Maß des kleinsten Schneidkantenabstands (25) auf ein Fußmaß der schwanzseitigen kleinsten Strahlengräte (921) eingestellt wird, so dass die zunehmende, den Schneidspalt (24) aufweitende Keilbreite (94) mit dem genannten Fußmaß als kleinster Keilbreite (941) beginnt.

3. Verfahren nach Anspruch 1 oder 2, **dadurch gekennzeichnet, dass** der Filetierschnitt als Rückenschnitt ausgeführt wird, der an die dorsalen Strahlengräten (92) des Fisches (9) herangeführt wird.

4. Verfahren nach einem der Ansprüche 1 bis 3, **dadurch gekennzeichnet, dass** der Filetierschnitt mit fixierter V-Anordnung (2) der Kreismesser (21) unter Weitung des Schneidspalts (24), die an schwanzseitig äußerster Strahlengräte (921) beginnt und an kopfseitig äußerster Strahlengräte (922) endet, längs der vollständigen Reihe der Strahlengräten (92) durchgeführt wird, wobei die sich in ihrer Länge verdickenden Strahlengräten (92) im Raum zwischen den in der V-Anordnung (2) fixierten Kreismessern (21) frei bleiben.

5. Verfahren nach einem der Ansprüche 1 bis 3, **dadurch gekennzeichnet, dass** die fixierte V-Anordnung (2) der Kreismesser (21), in der die Auf weitung des Schneidspalts (24) durch federelastisches Abbiegen der Kreismesser-Schneidkanten (3) durchgeführt wird, wenigstens bis zum mittleren Bereich des Fisches (9) beibehalten wird.

6. Verfahren nach einem der Ansprüche 1 bis 5, **dadurch gekennzeichnet, dass** die jedenfalls anfängliche, bei Eintritt der schwanzseitigen Strahlengräten (92) in den Schneidspalt (24) fixierte Position der V-Anordnung (2) der Kreismesser (21) in Positionen der V-Anordnung (2) übergeht, die durch axiales Verdrängen der Kreismesser (21) infolge der sich vergrößernden Keilbreiten (94) der Strahlengräten (92) entstehen, wobei zugleich die zunehmenden Keilbreiten (94) der Strahlengräten (92) den Schneidspalt (24) durch Abbiegen der Schneidkanten (3) aufweiten.

7. Verfahren nach einem der Ansprüche 1 bis 6, **dadurch gekennzeichnet, dass** die Bauchhöhlen aufweisenden Fische (9) in linearer Filetierlinie (200) mittels Sätteln, die in die Bauchhöhle einfassen, gefördert werden.

8. Verfahren nach einem der Ansprüche 1 bis 7, **dadurch gekennzeichnet, dass** die Kreismesser (21) im Bereich des Schneidspalts (24) mit der Fischförderrichtung (60) entsprechender Drehrichtung (40) betrieben werden.

9. Verfahren nach einem der Ansprüche 1 bis 8, **dadurch gekennzeichnet, dass** Weißfisch aus der Gruppe Alaska Pollack, Schellfisch, Kabeljau und Seelachs geschnitten werden.

10. Verfahren nach einem der Ansprüche 1 bis 8, **dadurch gekennzeichnet, dass** Salmoniden aus der Gruppe Lachsforellen, Pink Salmon geschnitten werden.

11. Vorrichtung zum Durchführen eines Filetierschnitts gemäß dem Verfahren nach einem der Ansprüche 1 bis 10, umfassend ein Paar (20) von scharfe Schneidkanten (3) aufweisenden, Fleisch durchschneidenden Kreismessern (21), die, eine V-Anordnung (2) der Kreismesser (21) bestimmend, mit einem Messerwinkel (22) zueinander ausgerichtete Antriebsachsen (41) aufweisen, sowie eine Fördereinrichtung (6), mit der die Fische (9) in Reihe schwanzvoraus gefördert werden und die einen freien Raum belässt, in dem das Kreismesserpaar zum Abschneiden des Fleisches längs einer Reihe von an einem Hauptgrätenstrunk (910) abstehenden Strahlengräten (92) des Fisches (9) angeordnet ist, **dadurch gekennzeichnet, dass** die Kreismesser (21) in ihrer V-Anordnung (2) an dem passierenden Hauptgrätenstrunk (910) nächstliegenden Zenitstellen der Schneidkanten (3) einen Schneidspalt (24) bilden, der den kleinsten Schneidkantenabstand (25) des Messerpaares (20) aufweist, dessen Größe zum Schneiden der geförderten Fische (9) einrichtbar ist, dass die V-Anordnung (2) der Kreismesser (21) eine fixierte Grundstellung aufweist, der der genannte kleinste Schneidkantenabstand (25) mit einem festen Grundmaß zugeordnet ist, das zumindest im Wesentlichen gleich einer oder kleiner als eine Keilbreite (94) der schwanzseitig äußersten Strahlengräte (921) des geförderten Fisches (9) ist, und dass die Schneidkanten (3) der Kreismesser (21) mit Schneidkantenbereichen (31) ausgebildet sind, mittels derer die Schneidkanten (3) in der fixierten Grundstellung gegen materialelastische Rückstellkraft aus der zugehörigen Kreismesserfläche (32) heraus derart verformbar sind, dass der Schneidspalt (24) mittels durch ihn hindurchgeförderter Strahlengräten (92) in einem Maß aufweitbar ist, das, dem Schneidkantenabstand (25) entsprechend, der Differenz zwischen der Keilbreite (941) der schwanzseitig äußersten Strahlengräte (921) und der Keilbreite (942) einer kopfseitigen Strahlengräte (922) entspricht und daran angepasst ist.

12. Vorrichtung nach Anspruch 11, **dadurch gekennzeichnet, dass** die Fördereinrichtung (6) einen Sättel umfassenden Förderer umfasst, wobei die Sättel zum Eingriff in die Bauchhöhle der Fische (9) eingerichtet sind.

13. Vorrichtung nach Anspruch 11 oder 12, **dadurch gekennzeichnet, dass** die Kreismesser (21) zum Durchführen eines den Filetierschnitt herstellenden Rückenschnitts ausgebildet und angeordnet sind.

14. Vorrichtung nach einem der Ansprüche 11 bis 13, **dadurch gekennzeichnet, dass** die Kreismesser (21) gegen rückstellende Druckkraft axial verlagerbar angeordnet sind, wobei axiale Verlagerung so eingerichtet ist, dass die V-Grundstellung unterhalb einer vorgebbaren Größe der Druckkraft fixiert bleibt.

15. Vorrichtung nach Anspruch 14, **dadurch gekennzeichnet, dass** die die axiale Verlagerung der Kreismesser (21) zulassende und ihr entgegenwirkende Druckkraft mit zugehöriger Lagerung größer eingerichtet ist als eine das Abbiegen der Schneidkanten (3) zulassende und diesem Abbiegen entgegenwirkende Rückstellkraft in dem kleinsten Schneidspalt (24), wobei die kleinere Rückstellkraft in dem Schneidspalt (24) durch elastische Materialbeschaffenheit des Bereichs (31) der Schneidkanten (3) bestimmt und eingestellt ist.

16. Kreismesserpaar (20), eingerichtet zum Durchführen des Verfahrens nach einem der Ansprüche 1 bis 10 oder zur Verwendung in einer Vorrichtung (1) nach einem der Ansprüche 11 bis 15, **dadurch gekennzeichnet, dass** die Kreismesser (21) des Kreismesserpaares (20) Schneidkanten (3) mit Schneidkantenbereichen (31) aufweisen, mittels derer in fixierter V-Anordnung (2) der Kreismesser (21) die Schneidkanten (3) gegen materialelastische Rückstellkraft aus der zugehörigen Kreismesserfläche (32) heraus verformbar sind, wobei das Verformungsmaß in Bezug auf einen kleinsten Schneidspalt (24) der V-Anordnung (2) der Verformbarkeit entsprechend der Differenz der zwischen der Keilbreite (94, 941) einer schwanzseitig kleinsten Strahlengräte (921) einer Reihe von Strahlengräten (92) und der Keilbreite (94, 942) einer kopfseitig gelegenen Strahlengräte (922) der genannten Strahlengrätenreihe angepasst und dadurch bestimmt ist.

17. Kreismesser (21), eingerichtet zum Durchführen des Verfahrens nach einem der Ansprüche 1 bis 10 oder zur Verwendung in einer Vorrichtung (1) nach einem der Ansprüche 11 bis 15 oder zum Einrichten eines Kreismesserpaares (20) nach Anspruch 16, **dadurch gekennzeichnet, dass** das Kreismesser (21) mit einem ringförmigen Schneidkantenbereich (31) ausgebildet ist, dessen Materialstärke und -eigenschaft so gewählt sind, dass das Kreismesser (21) in dem genannten Schneidkantenbereich (31) unter Aufbiegedruck quer zur Kreismesserfläche (32) wenigstens im dynamischen drehenden Zustand quer zu der Kreismesserfläche (32) wellenartig längs seiner Schneidkante (3) unter Wirkung einer materialelastischen Rückstellkraft verformbar ist, wobei die Verformung bei Entfallen des Aufbiegedrucks beseitigt ist.

18. Kreismesser nach Anspruch 17, **dadurch gekennzeichnet, dass** das Kreismesser (21) eine elastische Abbiegefähigkeit der Schneidkante (3) beidseitig quer zur Kreismesserfläche (32) im Bereich von ca. 0,04 mm/Grad bis 0,06/Grad aufweist.

## Claims

1. Method for performing a filleting cut for filleting fish (9), wherein the fish (9) are conveyed tail-first in a filleting line (200) and the filleting cut is performed along a row of wedge-shaped ray bones (92) projecting away from a main bone stem (910) with a wedge width (94) increasing from ray bone (92) to ray bone (92) by means of a pair (20) of circular knives (21) which have sharp cutting edges (3) and which cut through meat, said circular knives having drive axes (41) which are oriented at a knife angle (22) relative to one another and define a V-shaped arrangement (2) of the circular knives (21), wherein the conveyed fish (9) are cut by the filleting cut starting from their tail end, wherein the filleting cut is performed with a setting and position of the circular knives (21) such that the circular knives (21) in the V-shaped arrangement (2) have at their zenith points of the cutting edges (3) located closest to the main bone stem (910) a set smallest cutting edge spacing (25) which defines a cutting gap (24), and in that, starting from the tail end, meat of each fish (9) is cut by means of the circular knife pair (20) such that the cutting gap (24) with the smallest cutting edge spacing (25) is set to a basic size which is at least substantially equal to or smaller than a wedge width (941) of the outermost ray bone (921) at the tail end of the conveyed fish (9), and in that, in the fixed position of the V-shaped arrangement (2) of the circular knives (21), the ray bones (92), the wedge widths (94) of which increase from ray bone (92) to ray bone (92) towards the fish head end, are guided by the fish conveyor through the cutting gap (24) in a manner bearing against the circular knife cutting edges (3), wherein, starting from the basic size in the fixed V-shaped arrangement (2), the circular knife cutting edges (3), which in their cutting edge region (31) are flexibly deformable out of the associated circular knife surface (32) counter to an elastic restoring force, are displaced counter to the elastic restoring force by means of the broadening ray bones (92) with increasing widening of the cutting gap (24).

2. Method according to claim 1, **characterized in that** the size of the smallest cutting edge spacing (25) is set to a root size of the smallest ray bone (921) at the tail end, so that the increasing wedge width (94) which widens the cutting gap (24) starts with said root size as the smallest wedge width (941).

3. Method according to claim 1 or 2, **characterized in that** the filleting cut is performed as a back cut which is guided along the dorsal ray bones (92) of the fish (9).

4. Method according to any one of claims 1 to 3, **characterized in that** the filleting cut is performed along the entire row of ray bones (92) with a fixed V-shaped arrangement (2) of the circular knives (21) and with a widening of the cutting gap (24) that starts at the outermost ray bone (921) at the tail end and ends at the outermost ray bone (922) at the head end, wherein the ray bones (92), which become thicker along their length, remain free in the space between the circular knives (21) fixed in the V-shaped arrangement (2).

5. Method according to any one of claims 1 to 3, **characterized in that** the fixed V-shaped arrangement (2) of the circular knives (21), in which the cutting gap (24) is widened by an elastic bending of the circular knife cutting edges (3), is maintained at least until the middle region of the fish (9).

6. Method according to any one of claims 1 to 5, **characterized in that** the position of the V-shaped arrangement (2) of the circular knives (21), which is fixed in any event initially when the ray bones (92) at the tail end enter the cutting gap (24), transitions into positions of the V-shaped arrangement (2) which arise as a result of axial displacement of the circular knives (21) due to the increasing wedge widths (94) of the ray bones (92), wherein at the same time the increasing wedge widths (94) of the ray bones (92) widen the cutting gap (24) by bending the cutting edges (3).

7. Method according to any one of claims 1 to 6, **characterized in that** the fish (9) having abdominal cavities are conveyed in a linear filleting line (200) by means of saddles which engage in the abdominal cavity.

8. Method according to any one of claims 1 to 7, **characterized in that** the circular knives (21) in the region of the cutting gap (24) are operated with a direction of rotation (40) corresponding to the fish conveying direction (60).

9. Method according to any one of claims 1 to 8, **characterized in that** white fish from the group consisting of Alaska pollock, haddock, cod and saithe are cut.

10. Method according to any one of claims 1 to 8, **characterized in that** salmonids from the group consisting of trout and pink salmon are cut.

11. Apparatus for performing a filleting cut by the method according to any one of claims 1 to 10, comprising a pair (20) of circular knives (21) which have sharp cutting edges (3) and which cut through meat, said circular knives having drive axes (41) which are oriented at a knife angle (22) relative to one another and define a V-shaped arrangement (2) of the circular knives (21), as well as a conveying device (6) by which the fish (9) are conveyed tail-first in a row and which leaves a free space in which the circular knife pair is arranged for cutting off the meat along a row of ray bones (92) of the fish (9) that project away from a main bone stem (910), **characterized in that** the circular knives (21) in their V-shaped arrangement (2) form at zenith points of the cutting edges (3) located closest to the passing main bone stem (910) a cutting gap (24) which has the smallest cutting edge spacing (25) of the knife pair (20), the size of which can be configured for cutting the conveyed fish (9), **in that** the V-shaped arrangement (2) of the circular knives (21) has a fixed basic position to which there is assigned said smallest cutting edge spacing (25) with a fixed basic size which is at least substantially equal to or smaller than a wedge width (94) of the outermost ray bone (921) at the tail end of the conveyed fish (9), and **in that** the cutting edges (3) of the circular knives (21) are designed with cutting edge regions (31) by means of which the cutting edges (3) in the fixed basic position are deformable out of the associated circular knife surface (32) counter to an elastic restoring force in such a way that the cutting gap (24), by means of ray bones (92) that are conveyed through it, can be widened to a size, corresponding to the cutting edge spacing (25), that corresponds to and is adapted to the difference between the wedge width (941) of the outermost ray bone (921) at the tail end and the wedge width (942) of a ray bone (922) at the head end.

12. Apparatus according to claim 11, **characterized in that** the conveying device (6) comprises a conveyor comprising saddles, wherein the saddles are configured to engage in the abdominal cavities of the fish (9).

13. Apparatus according to claim 11 or 12, **characterized in that** the circular knives (21) are designed and arranged to perform a back cut which produces the filleting cut.

14. Apparatus according to any one of claims 11 to 13, **characterized in that** the circular knives (21) are arranged such as to be able to be displaced axially counter to a restoring pressure force, wherein the axial displacement is such that the V-shaped basic position remains fixed below a predefinable magnitude of the pressure force.

15. Apparatus according to claim 14, **characterized in that** the pressure force with associated bearing which permits and acts against the axial displacement of the circular knives (21) is configured to be greater than a restoring force in the smallest cutting gap (24) which permits the bending of the cutting edges (3) and acts against said bending, wherein the smaller restoring force in the cutting gap (24) is defined and set by the elastic material nature of the region (31) of the cutting edges (3).

16. Circular knife pair (20), configured for carrying out the method according to any one of claims 1 to 10 or for use in an apparatus (1) according to any one of claims 11 to 15, **characterized in that** the circular knives (21) of the circular knife pair (20) have cutting edges (3) with cutting edge regions (31) by means of which, in the fixed V-shaped arrangement (2) of the circular knives (21), the cutting edges (3) are deformable out of the associated circular knife surface (32) counter to an elastic restoring force, wherein the extent of the deformation in relation to a smallest cutting gap (24) of the V-shaped arrangement (2) is adapted to and thus defined by the deformability corresponding to the difference between the wedge width (94, 941) of a smallest ray bone (921) at the tail end of a row of ray bones (92) and the wedge width (94, 942) of a ray bone (922) located at the head end of said ray bone row.

17. Circular knife (21), configured for carrying out the method according to any one of claims 1 to 10 or for use in an apparatus (1) according to any one of claims 11 to 15 or for setting up a circular knife pair (20) according to claim 16, **characterized in that** the circular knife (21) is designed with an annular cutting edge region (31), the material thickness and material properties of which are selected in such a way that the circular knife (21) in said cutting edge region (31) is deformable under a bending pressure transverse to the circular knife surface (32) at least in the dynamically rotating state transversely to the circular knife surface (32) in a wave-like manner along its cutting edge (3) under the effect of an elastic restoring force, wherein the deformation is cancelled when the bending pressure stops.

18. Circular knife according to claim 17, **characterized in that** the circular knife (21) has an elastic bendability of the cutting edge (3) on both sides transversely to the circular knife surface (32) in the range from approximately 0.04 mm/degree to 0.06/degree.

## Revendications

1. Un procédé de découpe des filets permettant de lever les filets des poissons (9), dans laquelle les poissons (9) sont transportés sur une ligne de filetage (200) la queue orientée vers l'avant, et la découpe des filets est réalisée le long d'un rayon épineux (92) biseauté faisant saillie en s'éloignant d'une arrêt principale (910) et dont la largeur de biseau (94) s'accroît d'un rayon épineux (92) à l'autre, à l'aide d'une paire (20) de couteaux rotatifs (21) dotés de bords de coupe (3) tranchants et capables de trancher de la chair, présentant des axes d'entraînement (41) orientés l'un par rapport à l'autre selon un angle de couteau (22) déterminant un agencement en V (2) des couteaux rotatifs (21), dans laquelle les poissons (9) transportés sont coupés depuis l'extrémité de la queue par la découpe des filets, dans laquelle la découpe des filets est réalisé avec un réglage et une position des couteaux rotatifs (21) de façon à ce que les couteaux rotatifs (21) dans leur agencement en V (2) présentent un plus petit écart de bord de coupe (25) réglé définissant une fente de coupe (24) au niveau des zéniths des bords de coupe (3) les plus proches de l'arrêt principale (910), et de façon à ce que la découpe de la chair de chaque poisson (9) soit assurée depuis l'extrémité de la queue à l'aide de la paire de couteaux rotatifs (20) de manière à ce que la fente de coupe (24) soit réglée avec le plus petit écart de bord de coupe (25) sur une dimension de base qui est au moins sensiblement égale ou inférieure à une largeur de biseau (941) du rayon épineux (921) le plus à l'extérieur côté queue du poisson (9) transporté, et de façon à ce qu'en position déterminée de l'agencement en V (2) des couteaux rotatifs (21) les rayons épineux (92), dont les largeurs de biseau (94) augmentent d'un rayon épineux à l'autre (92) en avançant vers la tête du poisson, soient guidées dans la fente de coupe (24) par le convoyeur de poissons en les faisant porter contre les bords de coupe (3) des couteaux rotatifs, dans laquelle les bords de coupe (3) des couteaux rotatifs, qui peuvent être déformés dans leur zone de bord de coupe (31) à l'encontre d'une force de rappel élastique de manière flexible à partir de la surface intégrée des couteaux rotatifs (32), sont refoulés à l'encontre de la force de rappel élastique par l'intermédiaire des rayons épineux (92) s'élargissant sous l'effet de l'élargissement croissant de la fente de coupe (24) à partir de a dimension de base de l'agencement en V (2) déterminé.

2. Un procédé selon la revendication 1, **caractérisé en ce que** la taille du plus petit écart de bord de coupe (25) est réglée en tant que taille de référence du plus petit rayon épineux (921) du côté de la queue, afin que la largeur de biseau (94) croissante augmentant l'écartement de la fente de coupe (24) commence avec ladite taille de référence en tant que plus petite largeur de biseau (941).

3. Un procédé selon la revendication 1 ou 2, **caractérisé en ce que** la découpe des filets est réalisée sous forme de coupe dorsale, menée sur les rayons épineux (92) dorsaux du poisson (9).

4. Un procédé selon les revendications 1 à 3, **caractérisé en ce que** la découpe des filets avec agencement déterminé en V (2) du couteau rotatif (21) et écartement de la fente de coupe (24) commençant au niveau du rayon épineux (921) le plus à l'extérieur du côté de la queue et finissant au niveau du rayon épineux (922) le plus à l'extérieur du côté de la tête est effectuée le long de la totalité du rayon épineux (92), dans laquelle les rayons épineux (92) s'épaississent dans leur longueur dans l'espace situé entre les couteaux rotatifs (21) agencés en V (2) restant libres.

5. Un procédé selon l'une des revendications 1 à 3, **caractérisé en ce que** l'agencement déterminé en V (2) des couteaux rotatifs (21), dans lequel l'élargissement de la fente de coupe (24) est assuré par une déformation élastique des bords de coupe (3) des couteaux rotatifs, est préservé au moins jusqu'au milieu du poisson (9).

6. Un procédé selon l'une des revendications 1 à 5, **caractérisé en ce que** la position initiale déterminée dans tous les cas de l'agencement en V (2) des couteaux rotatifs (21) lors de l'introduction des rayons épineux (92) dans la fente de coupe (24) transite par la position de l'agencement en V (2) découlant du déplacement axial des couteaux rotatifs (21) dû à l'augmentation de la largeur de biseau (94) des rayons épineux (92), dans laquelle l'augmentation de la largeur de biseau (94) des rayons épineux (92) accroît simultanément la fente de coupe (24) en déformant les bords de coupe (3).

7. Un procédé selon les revendications 1 à 6, **caractérisé en ce que** les poissons (9) disposant de cavités abdominales sont transportés sur des lignes de filetage (200) linéaires à l'aide de selles s'engageant dans la cavité abdominale.

8. Un procédé selon les revendications 1 à 7, **caractérisé en ce que** les couteaux rotatifs (21) se trouvant dans la zone de la fente de coupe (24) sont entraînés dans une direction de rotation (40) correspondant à la direction de transport des poissons (60).

9. Un procédé selon l'une des revendications 1 à 8, **caractérisé en ce que** la découpe est réalisée sur des poissons à chair blanche, appartenant à un groupe comprenant le lieu de l'Alaska, l'églefin, le cabillaud et le lieu noir.

10. Un procédé selon l'une des revendications 1 à 8, **caractérisé en ce que** la découpe est réalisée sur des salmonidés, appartenant à un groupe comprenant la truite saumonée et le saumon rose.

11. Un dispositif de réalisation d'une découpe des filets conformément au procédé décrit dans l'une des revendications 1 à 10, comprenant une paire (20) de couteaux rotatifs (21) dotés de bords de coupe (3) tranchants et capables de trancher de la chair, présentant des axes d'entraînement (41) orientés l'un par rapport à l'autre selon un angle de couteau (22) déterminant un agencement en V (2) des couteaux rotatifs (21), ainsi qu'un dispositif de transport (6) à l'aide duquel les poissons sont transportés en ligne la queue vers l'avant et permettant de conserver un espace libre dans lequel la paire de couteaux rotatifs de découpe de la chair est placée le long d'un rayon épineux (92) faisant saillie en s'éloignant d'une arrête principale (910) du poisson (9), **caractérisé en ce que** les couteaux rotatifs (21) dans leur agencement en V (2) forment une fente de coupe (24) au niveau des zéniths des bords de coupe (3) les plus proches de l'arrête principale (910) en mouvement, disposant du plus petit écart de bord de coupe (25) de la paire de couteaux (20), dont la dimension de découpe des poissons (9) transportés est réglable, **en ce que** l'agencement en V (2) des couteaux rotatifs (21) dispose d'un réglage déterminé de base, auquel est assigné ledit plus petit écart de bord de coupe (25) dont la dimension est au moins sensiblement égale ou inférieure à une largeur de biseau (94) du rayon épineux (921) le plus à l'extérieur côté queue du poisson (9) transporté, et **en ce que** les bords de coupe (3) des couteaux rotatifs (21) sont munis de zones de bord de coupe (31), grâce auxquelles les zones de bords de coupe (31) dans leur position déterminée de base peuvent être déformées à l'encontre d'une force de rappel élastique à partir de la surface intégrée des couteaux rotatifs (32) de façon à ce que la fente de coupe (24) puisse être écarté par le moyen des rayons épineux (92) la traversant jusqu'à une dimension d'écart de bord de coupe (25) correspondant à la différence entre la largeur de biseau (941) du rayon épineux (921) le plus extérieur du côté de la queue et la largeur de biseau (942) du rayon épineux (922) le plus extérieur du côté de la tête, et y soient adaptés.

12. Un dispositif selon la revendication 11, **caractérisé en ce que** le dispositif de transport (6) comprend un convoyeur muni de selles, dans lequel les selles sont réglées de façon à pénétrer dans la cavité abdominale des poissons (9).

13. Un dispositif selon la revendication 11 ou 12, **caractérisé en ce que** les couteaux rotatifs (21) sont conçus et agencés pour réaliser une coupe dorsale afin d'assurer la découpe des filets.

14. Un dispositif selon l'une des revendications 11 à 13, **caractérisé en ce que** les couteaux rotatifs (21) sont agencés de façon à pouvoir être déplacés axialement à l'encontre d'une force de pression de rappel, dans lequel le déplacement axial est réglé de façon à ce que la position de base en V soit reste déterminée en dessous d'une valeur de force de pression pouvant être définie.

15. Un dispositif selon la revendication 14, **caractérisé en ce que** la force de pression avec palier correspondant permettant le déplacement axial du couteau rotatif (21) et s'exerçant à l'encontre de ce dernier est réglée de façon à être supérieure à une force de rappel permettant la déformation des bords de coupe (3) et s'exerçant à l'encontre de ces derniers dans la plus petite fente de coupe (24), dans lequel la force de rappel la plus petite dans la fente de coupe (24) est définie et réglée en fonction des propriétés élastiques des matériaux de la zone (31) des bords de coupe (3).

16. Une paire de couteaux rotatifs (20) conçus de façon à permettre la mise en oeuvre du procédé selon l'une des revendications 1 à 10 ou à être utilisés dans un dispositif (1) selon l'une des revendications 11 à 15, **caractérisée en ce que** les couteaux rotatifs (21) de la paire de couteaux rotatifs (20) disposent de bords de coupe (3) munis de zones de bord de coupe (31) grâce auxquelles les bords de coupe (3) peuvent être déformés à l'encontre d'une force de rappel élastique à partir de la surface intégrée des couteaux rotatifs (32) en cas d'agencement déterminé en V (2) des couteaux rotatifs (21), dans laquelle l'amplitude de déformation par rapport à une plus petite fente de coupe (24) de l'agencement en V (2) est adaptée en fonction de la déformabilité correspondant à la différence entre la largeur de biseau (94, 941) d'un plus petit rayon épineux (921) du côté de la queue d'un rayon épineux (92) et la largeur de biseau (94, 942) d'un rayon épineux placé du côté de la tête (922) dudit rayon épineux, et définie par cette dernière.

17. Un couteau rotatif (21) conçu de façon à permettre la mise en oeuvre du procédé selon l'une des revendications 1 à 10 ou à être utilisés dans un dispositif (1) selon l'une des revendications 11 à 15 ou à monter une paire de couteaux rotatifs (20) selon la revendication 16, **caractérisé en ce que** le couteau rotatif (21) est muni d'une zone de bord de coupe (31) de forme circulaire dont la résistance et les propriétés du matériau ont été choisis de façon à ce que le couteau rotatif (21) soit déformable dans ladite zone de bord de coupe (31) sous l'effet d'une pression provoquant un pliage exercée de façon transversale par rapport à la surface du couteau rotatif (32) au moins dans un état rotatif dynamique transversalement par rapport à la surface du couteau rotatif (32) de façon ondoyante le long du bord de coupe (3) sous l'effet d'une force de rappel élastique du matériau, dans lequel la déformation est annulée en cas de disparition de la pression provoquant la déformation.

18. Un couteau rotatif selon la revendication 17, **caractérisé en ce que** le bord de coupe (3) du couteau rotatif (21) dispose des deux côtés d'une capacité de déformation élastique transversale par rapport à la surface du couteau rotatif (32) sur une plage comprise entre 0,04 mm/degré et 0,06 mm/degré.
